Europäisches Patentamt

**European Patent Office**

**Office européen des brevets**

(19)

(11) Numéro de publication: **0 015 848**
**B1**

(12) **FASCICULE DE BREVET EUROPEEN**

(45) Date de publication du fascicule du brevet: **15.02.84**

(51) Int. Cl.³: **B 65 G 47/90**, B 65 G 49/04

(21) Numéro de dépôt: **80400305.1**

(22) Date de dépôt: **05.03.80**

(54) **Dispositif de manoeuvre de pièces à traiter pour installations de traitement.**

(30) Priorité: **06.03.79 FR 7905760**

(43) Date de publication de la demande:
**17.09.80 Bulletin 80/19**

(45) Mention de la délivrance du brevet:
**15.02.84 Bulletin 84/7**

(84) Etats contractants désignés:
**AT BE CH DE GB IT LU NL SE**

(56) Documents cités:
**CH - A - 576 882**
**FR - A - 2 270 177**
**GB - A - 1 279 486**
**SU - A - 182 577**
**US - A - 2 581 568**
**US - A - 2 912 125**
**US - A - 3 092 270**

(73) Titulaire: **ALPASONIC S.A. Société dite:**
**Bas-Monthoux**
**F-74100 Annemasse (FR)**

(72) Inventeur: **Berthelon, Bernard**
**19, rue du 18 Août**
**F-74240 Gaillard (FR)**

(74) Mandataire: **Rodhain, Claude**
**30, rue La Boétie**
**F-75008 Paris (FR)**

Courier Press, Leamington Spa, England.

Dispositif de manoeuvre de pièces à traiter pour installations de traitement

La présente invention concerne les dispositifs de manoeuvre de pièces à traiter pour installations de traitement, notamment chimique ou physico-chimique, ces dispositifs étant du type comprenant un châssis, des moyens de support de la ou des pièces à traiter et des moyens de déplacement de ces moyens de support par rapport au châssis suivant une direction donnée entre une position de traitement et une position de retrait.

Ces dispositifs permettent d'amener les pièces à traiter dans la position de traitement située normalement dans une enceinte ou une cuve de traitement, de les animer en général d'un mouvement d'agitation pendant le traitement, puis de les évacuer vers la position de retrait.

Ces dispositifs trouvent une application particulièrement avantageuse dans les installations de traitement de surface, par exemple de nettoyage et/ou dégraissage, et/ou rinçage, et/ou séchage, ces installations comportant dans le cas où elles permettent d'exécuter diverses opérations, plusieurs postes disposés côte à côte à proximité d'un bâti auquel est associé un ou plusieurs des dispositifs considérés, le châssis de ces dispositifs étant, dans ce cas, réalisé sous forme d'un chariot monté mobile par rapport au bâti entre, suivant les cas, une seule paire de postes ou l'ensemble des postes.

Le brevet américain 2 912 125 décrit un dispositif de transport et de manipulation de pièces à usiner qui comprend und châssis sur lequel sont montés des moyens de serrage de la pièce constituée par des mâchoires qui se déplacent dans un plan horizontal et qui sont montés à pivotement autour d'un axe horizontal sensiblement central; le châssis peut effectuer des mouvements de montée ou de descente et des mouvements de pivotement. Le mouvement de pivotement des mâchoires est commandé par le mouvement de pivotement du châssis.

Il faut noter que les mâchoires subissent un pivotement et non une rotation continue, ce pivotement étant par exemple de 180° dans l'exemple représenté.

Le dispositif de transport et de manipulation de pièces à usiner décrit dans ce brevet américain permet simplement de faire passer une seule pièce d'un poste de traitement à un autre, sans que cette pièce ne soit soumise à aucun traitement. Il ne s'agit donc nullement du transport et de la manipulation de plusieurs pièces à traiter, lesdites pièces étant disposées dans un récipient ouvert tel qu'un panier, pendant le cycle de traitement considéré. Par ailleurs, le dispositif décrit dans ce brevet américain ne permet pas de faire tourner les pièces à traiter, afin d'améliorer le rendement du traitement.

Le brevet anglais 1 279 486 décrit un dispositif destiné à la manutention de lots d'objets dont au moins une partie des parois latérales s'évase vers le haut et comporte des mâchoires qui viennent se bloquer sur les objets à transporter en effectuant un déplacement quasi horizontal. En fait, les différents châssis effectuent comme dans le brevet US précité, des mouvements verticaux et des mouvements de rotation verticale et non pas des mouvements suivant trois axes perpendiculaires; de plus, il n'est prévu aucun moyen qui permettrait de faire pivoter les objets transportés autour d'un axe horizontal passant approximativement par le centre du lot d'objets transportés. Ces objets sont transportés seuls et non pas dans un récipient. A ce sujet, il y a lieu de noter que la plaque de pression ne peut en aucun cas être assimilée à un couvercle puisqu'elle sert au maintien des objets à transporter. En effet, si cette plaque n'était pas prévue, de fait de la conicité des parois latérales des objets transportés, ces derniers ne seraient pas maintenus en place et remonteraient entre les deux mâchoires.

La demande de brevet français 2 270 177 décrit un mécanisme de manutention qui est destiné à faire passer des charges comportant un fond rigide et qui peuvent donc être des récipients ouverts d'un poste de transport à un deuxième en effectuant un pivotement horizontal de 90 ou 180°. Le dispositif décrit est voisin de celui décrit dans le brevet anglais précité puisque les mouvements du chariot sont les mêmes et que l'on prévoir également un plateau réglable destiné au blocage de la charge lorsqu'elle est saisie. En particulier, il faut noter qu'il n'est prévu aucun mouvement de rotation de la charge dans un plan vertical.

Le brevet russe 182 577 décrit un dispositif de préhesion de charge pour une machine de manutention; ce dispositif comporte deux plaques parallèles dont la distance est variable et qui comportent des sections périphériques montées à rotation afin de s'adapter à des objets de formes variées. Par ailleurs, un vérin et un dispositif à crémaillère permettent de réaliser un pivotement limité de l'objet saisi. Le dispositif connu ne permet pas d'obtenir des mouvements suivant trois axes perpendiculaires sur une rotation de l'objet saisi.

L'invention se propose de réaliser un dispositif de manutention du type décrit ci-dessus destiné à la manutention de récipients ouverts contenant des pièces à traiter, le dispositif selon l'invention étant utilisé pour les opérations de traitement elles-mêmes. L'invention se propose également de réaliser un dispositif de manoeuvre qui permette d'obtenir une rotation véritable des objets transportés et non un simple pivotement. Ce mouvement de rotation doit pouvoir être exécuté indépendamment du mouvement propre du chariot ou châssis.

Par ailleurs, le dispositif selon l'invention, muni de ses moyens de rotation du récipient, doit présenter le plus faible encombrement possible. A cet effet, la présente invention concerne un dispositif de manoeuvre de pièces à traiter pour installation de traitement dans laquelle les pièces à traiter sont placées dans au moins un récipient ouvert, ce dispositif étant du type comprenant un châssis, des moyens de support du ou des récipients et des moyens de déplacement d'ensemble de ces moyens de support par rapport au châssis, lesdits moyens de support comportant deux organes de serrage qui sont mobiles l'un vers l'autre suivant une direction horizontale, et étant munis d'un couvercle de fermeture du récipient, ledit couvercle étant relié mécaniquement aux organes de serrage et étant maintenu en position de fermeture sur le récipient lorsque lesdits organes de serrage sont bloqués sur ce dernier, ledit dispositif comportant des moyens d'entrainement en rotation des moyens de support autour d'un axe horizontal sensiblement central par rapport au récipient, lesdits moyens d'entrainement en rotation étant indépendants des moyens de déplacement du châssis.

Grâce à cet agencement, il est possible d'amener de manière automatique, par exemple à l'aide de convoyeurs, les pièces à traiter elles-mêmes lorsqu'elles sont de grande dimension ou des paniers les contenant lorsqu'elles sont de plus petite dimension, jusque dans une position de préhension située à un poste d'entrée. L'amenée peut ainsi se faire, soit suivant une direction perpendiculaire à la fois à la direction de déplacement et à la direction de serrage, soit suivant la direction opposée à la direction de déplacement, c'est-à-dire latéralement ou par dessous, dans le cas où cette direction de déplacement est verticale et où les organes de serrage sont amenés par le haut en position de préhension. L'amenée et la préhension des pièces ou des paniers étant automatiques, aucune main-d'oeuvre spéciale n'est nécessaire et la cadence de fonctionnement est maximale. Il en est bien entendu de même au niveau de l'évacuation.

En outre, une autre opération se trouve supprimée et l'encombrement au sol correspondant gagné, grâce à la suppression des tambours, étant donné qu'après traitement et extraction des pièces ou paniers, ces tambours devraient être ramenés au poste d'entrée, ce qui n'est plus ici nécessaire.

Enfin, cet agencement permet de prendre une pièce ou un panier dans une file disposée sur un convoyeur sans aucune indexation, c'est-à-dire séparation des éléments, ce qui est particulièrement avantageux. Les éléments peuvent être pris, soit par les angles, soit par le milieu, seule la disposition des éléments de soutien devant varier à cet effet. On peut donc travailler sur des pièces ou des paniers de géométrie extrêmement différentes (moteur, seau à champagne, etc...). On peut, par ailleurs, utiliser de simples convoyeurs fonctionnant par gravité, ce qui réduit considérablement le prix de revient d'une installation.

Le fait que le dispositif comprenne, en outre des moyens d'entrainement en rotation des organes de serrage et qu'un couvercle soit relié à demeure à ces organes de serrage permet de procéder à une agitation des pièces à traiter pendant tout ou partie du traitement effectué à un poste donné, les pièces étant parfaitement maintenues en place par les organes de serrage et par le couvercle qui s'applique sur le panier. Ceci présente un avantage considérable par rapport aux dispositions précédemment connues dans lesquelles le couvercle devait être mis en place sur le panier après l'introduction de ce dernier dans le tambour, ce qui offrait des difficultés considérables dues au fait que certaines pièces dépassant du panier (pièces de décolletage, petites cuillers) empêchaient l'introduction du couvercle et qu'il en était également de même lorsqu'on utilisait des paniers présentant un certain type de poignées constituant un obstacle à l'introduction.

Le couvercle ici prévu sur le dispositif lui-même vient se mettre en place directement sur le panier, par dessus les pièces dépassant et entre les poignées, quel que soit le modèle de panier et la position des poignées et sans aucune difficulté, ce qui évite donc des manoeuvres complexes et fait encore bénéficier d'avantages tant sur la main-d'oeuvre que sur la cadence de travail.

D'autres caractéristiques et avantages de l'invention ressortiront de la description qui va suivre, à titre d'exemple non limitatif et en regard des dessins annexés sur lesquels:
— La Fig. 1 représente une vue en perspective d'une installation de traitement munie d'un dispositif suivant un premier mode de réalisation conforme à l'invention,
— les Fig. 2 et 3 représentent des vues schématiques de face de ce dispositif illustrant son fonctionnement,
— la Fig. 4 représente un vue partielle et en perspective du dispositif suivant un second mode de réalisation conforme à l'invention,
— les Fig. 5 et 6 représentent des vues de côté schématiques de ce dispositif illustrant son fonctionnement.

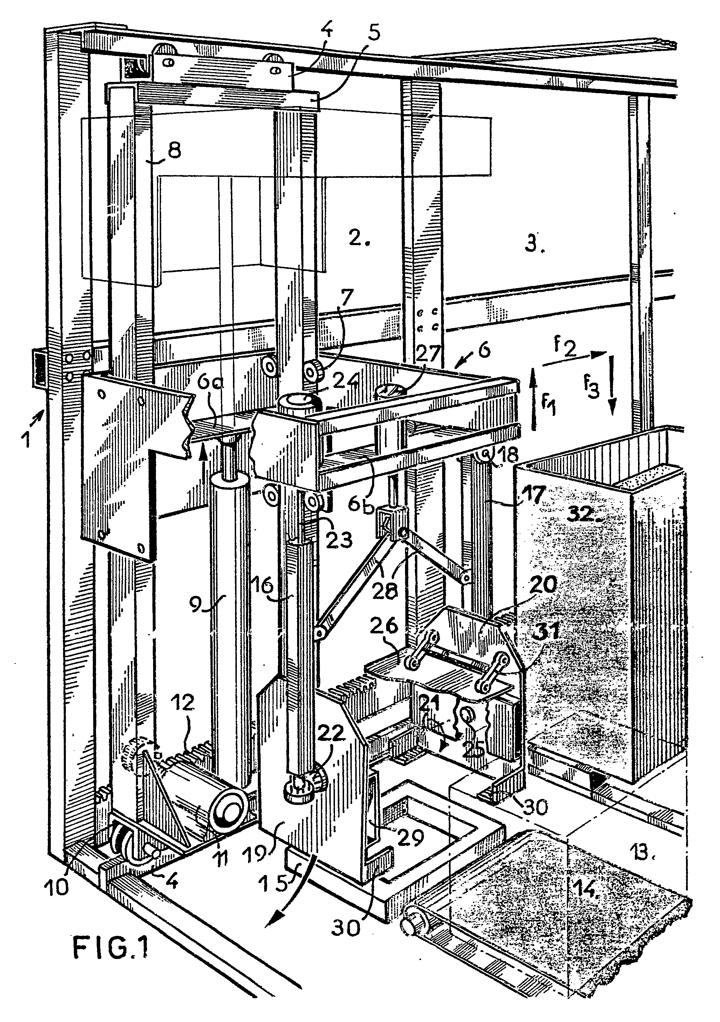

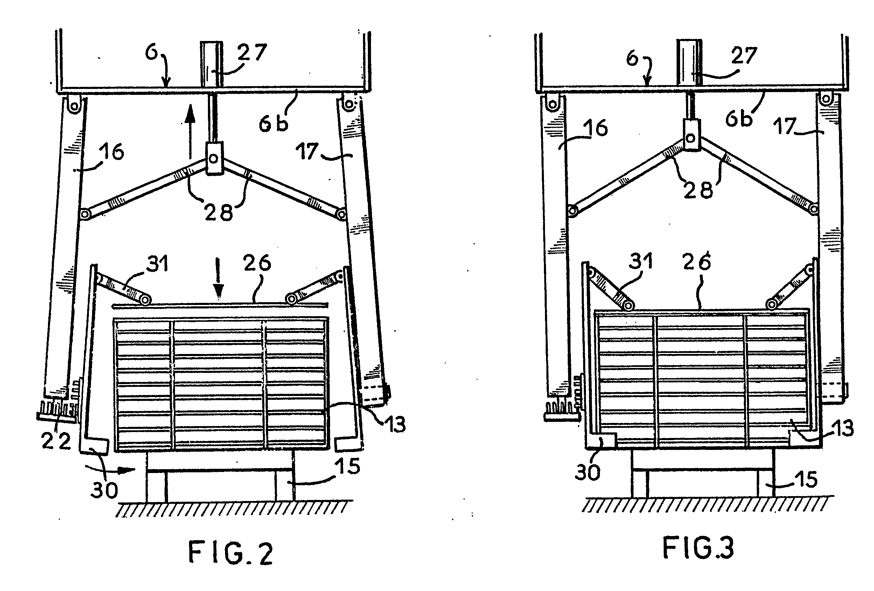

L'installation de traitement illustrée par les Fig. 1 à 3, qui peut être par exemple une installation de nettoyage et de dégraissage, comprend un bâti d'ensemble 1 le long duquel sont disposés plusieurs postes tels qu'un poste d'entrée ou d'amenée 2, un ou plusieurs postes de traitement 3 et un poste d'écacuation (non représenté). Le bâti 1 comporte des guides supérieurs et inférieurs 4 sur lesquels peut ou peuvent rouler un ou plusieurs chariots-châssis 5. Chacun de ces chariots-châssis constitue le châssis d'un dispositif conforme à l'invention.

Un tel dispositif comprend, outre le châssis 5, une tête ou bloc de déplacement 6 qui peut rouler à l'aide de galets 7 sur les montants 8 du châssis 5 au niveau de sa partie arrière 6a, tandis que sa partie avant 6b est disposée en porte-à-faux par rapport au châssis 5. Cette tête est montée mobile, entre une position inférieure (position d'amenée pour le poste 2 ou position de traitement pour le poste 3) et une position supérieure ou position de retrait (représentée en traits fins), à l'aide d'un vérin vertical 9 disposé entre la partie arrière 6a de cette tête et la traverse inférieure 10 du châssis 5 (sur laquelle se trouve d'ailleurs également disposé un moteur 11 permettant le déplacement du châssis 5 le long du bâti 1 grâce à une crémaillère 12).

La tête 6 est destinée à assurer la manipulation d'objets qui, dans le cas décrit, sont constitués par des paniers 13 qui sont amenés à la partie inférieure du poste 2 à l'aide d'un tapis à rouleaux horizontal 14 disposé perpendiculairement au bâti 1. Le panier 13 contient des pièces à traiter (non représentées) et il est amené par le tapis 14 sur un socle 15 disposé en-dessous de la partie avant 6b de la tête 6.

Aux deux angles de cette même partie avant 6b de la tête 6, sont suspendues deux barres verticales 16 et 17 qui sont articulées sur cette partie 6b autour d'axes horizontaux 18 perpendiculaires au bâti 1. A leurs extrémités inférieurs, les barres 16 et 17 portent des plaques de maintien ou serrage 19 et 20 verticales at perpendiculaires au bâti 1 et qui sont montées rotatives sur les barres 16 et 17 autour d'un axe de rotation commun horizontal 21 parallèle au bâti 1. La plaque 19 est entrainé en rotation à l'aide d'un renvoi d'angle 22 dispose à l'extrémité d'une tige verticale 23 qui traverse la barre 16 et est elle-même entrainée à son extrémité supérieure par un moteur 24 qui repose sur la partie avant 6b de la tête 6. La plaque 20 est montée libre en rotation à l'extrémité de la barre 17 par l'intermédiaire d'une roue libre 25, mais elle est solidaire en rotation de la plaque 19 par l'intermédiaire d'un couvercle 26 qui sera décrit par la suite. La partie avant 6b de la tête 6 porte en son milieu un vérin 27 dont la tige 39a, dirigée verticalement vers le bas, reçoit les extrémités articulées de deux biellettes 28 dont les autres extrémités sont articulées au milieu des deux barres 16 et 17.

L'écartement des axes 18 des barres 16 et 17 est tel que, dans la position verticale de ces barres, les plaques 19 et 20, ou éventuellement des éléments de renfort 29 disposés sur les faces en regard de ces plaques soient situés à une distance sensiblement égale à la largeur d'un panier 13. Les plaques 19 et 20, qui ont une forme générale rectangulaire, portent à leurs deux angles inférieurs des éléments de soutien 30 en forme de cornière et dirigés suivant la direction de l'axe de rotation 21, en faisant nettement saillie par rapport aux renforts 29 des plaques. A leurs parties supérieures, les plaques 19 et 20 portent le couvercle 26 qui est constitué par une plaque rectangulaire horizontale qui est suspendue par deux jeux de deux biellettes 31 à ces parties supérieures des plaques 19 et 20, ces biellettes étant articulées suivant des axes perpendiculaires au bâti 1. La largeur du couvercle 26 correspond à la distance séparant les plaques 19 et 20 pour la position verticale des barres 16 et 17, et la dimension et le positionnement des biellettes 31 sont prévus de telle manière que le couvercle soit pratiquement au contact des plaques 19 et 20 pour cette même position verticale des barres. Enfin, lar course du vérin 27 et la dimension et le positionnement des biellettes 28 sont prévus de manière que les barres 16 et 17 puissent pivoter vers l'extérieur, à partir de leur position verticale, d'un angle tel que les éléments de soutien 30 s'écartent les uns des autres à une distance légèrement supérieure à la largeur d'un panier 13, la largeur du socle 15 étant quant à elle inférieure à la distance séparant ces même éléments de support 30 lorsque les barres 16 et 17 sont verticales. Le fonctionnement du dispositif ainsi décrit est le suivant:

La tête 6 ètant placée en position haute, un panier 13 est amené à l'aide du tapis 14 sur le socle 15, sa face inférieure débordant de part et d'autre de ce socle. Après une ouverture des plaques 19 et 20 à l'aide du vérin 27, le vérin 9 amène la tête 6 dans sa position inférieure, position dans laquelle les plaques 19 et 20 et leurs éléments de soutien 30 viennent de part et d'autre du panier 13, tandis que le couvercle 26 vient se placer légèrement au-dessus de ce panier. Le rappel du vérin 27 ramène alors les barres et 17 en position verticale de sorte que les renforts 29 des plaques 19 et 20 viennent au contact des faces latérales du panier 13 et que les éléments de support 30 se placent sous les quatre angles inférieurs de ce panier, tandis que le couvercle 26 est appliqué sur la face supérieur du panier 13 par le jeu des biellettes 31. Le panier se trouve ainsi parfaitement maintenu par les plaques 19 et 20, les éléments de soutien 30 et la couvercle 26, les plaques 19 et 20 jouant en particulier le rôle d'organes de serrage sous l'action du vérin 27.

L'extension du vérin 9 ramène alors la tête 6 dans sa position supérieure (flèche f1), soulevant ainsi le panier 13 au-dessus de la partie inférieure du bâti. L'actionnement du moteur 11 déplace alors le châssis-chariot 5 le long de la crémaillère 12 jusqu'au poste 3 de traitement (flèche f2). La partie inférieure de ce poste 3 est occupée par une cuve de traitement 32 qui se trouve ainsi disposée directement au-dessous de la tête 6 et du panier 13 qu'elle porte. Une nouvelle manoeuvre du vérin 9 amène la tête 6 en position inférieure du poste 3, de sorte que le panier 13 porté par les plaques 19 et 20 est introduit à l'intérieur de la cuve de traitement (flèche F3). Dans cette position, la mise en service du moteur 24 entraine en rotation l'ensemble des plaques 19 et 20 et du couvercle 26 et le panier 13 que cet ensemble maintient serré. Cette rotation permet ainsi en particulier une agitation des pièces contenues dans le panier 13, à l'intérieur du bain que contient la cuve 32.

Une nouvelle manoeuvre de la tête 6 suivant les trois mouvements f1, f2, f3, permet de sortir le panier 13 de la cuve 32, de le déplacer jusqu'à un poste de traitement éventuel suivant et de le descendre dans la cuve de ce nouveau poste. Une fois que le panier 13 a été déplacé à travers les divers postes de traitement de l'installation, il est amené par la tête 6 jusqu'à un dernier poste ou poste de sortie analogue au poste 2 et auquel le panier 13 est déposé sur un socle 15 à partir duquel il est évacué par un tapis 14.

On constate que le couvercle 26 se met en place automatiquement sur le panier 13 quel que soit le modèle de ce dernier, et quelle que soit la disposition éventuelle des poignées sur celui-ci. En outre, cette fermeture est parfaitement automatique sans nécessiter aucun système particulier de verrouillage, puisque le couvercle s'applique dès que les plaques de maintien ou serrage 19 et 20 prennent le panier.

L'entrainement en rotation du panier favorise, lorsqu'il est exécuté en position basse d'un poste, une opération telle qu'un dégraissage, un nettoyage, en rinçage ou un séchage lorsqu'il s'agit d'un poste de traitement. Il est également possible d'effectuer une telle rotation dans une position intermédiaire située au-dessus d'une cuve, ce qui permet d'éviter les entrainements de fluides de traitement d'un poste à l'autre. Lorsqu'elle est effectuée au poste d'entrée 2, une telle rotation permet de vider les pièces contenues dans le panier 32 de leur huile soluble ou encore de diverses particules solides et liquides.

Il est bien entendu que le dispositif permet à volonté d'entrainer ou non le panier 13, la rotation étant par exemple exclue dans le cas de pièces fragiles à surface rectifiée ou rodée.

Il est encore possible de faire tourner un panier à l'intérieur d'une cuve, puis de la déposer à l'intérieur de cette cuve et de remonter le dispositif en position haute pour lui permettre d'aller prendre un autre panier et le déplacer entre deux autres postes, ce qui était absolument impossible avec les dispositifs classiques dans lesquels les paniers étaient logés dans des tambours.

On remarque que le débattement latéral des plaques 19 et 20 est extrêmement réduit puisqu'il est limité à la dimension des éléments de soutien 30, cette dimension pouvant par exemple être de l'ordre de 30 mm ce qui permet un gain considérable de place pour l'ensemble d'une installation.

Dans le cas particulier d'une installation de nettoyage en milieu solvant, il est possible de procéder à un transfert des paniers d'un poste à l'autre à l'intérieur d'un enceinte ou rehausse disposée à la partie supérieure du bâti au-dessus de l'ensemble des cuves de traitement, de sorte que le transfert des paniers a lieu dans les zones de condensation et d'évaporation, ce qui est particulièrement avantageux.

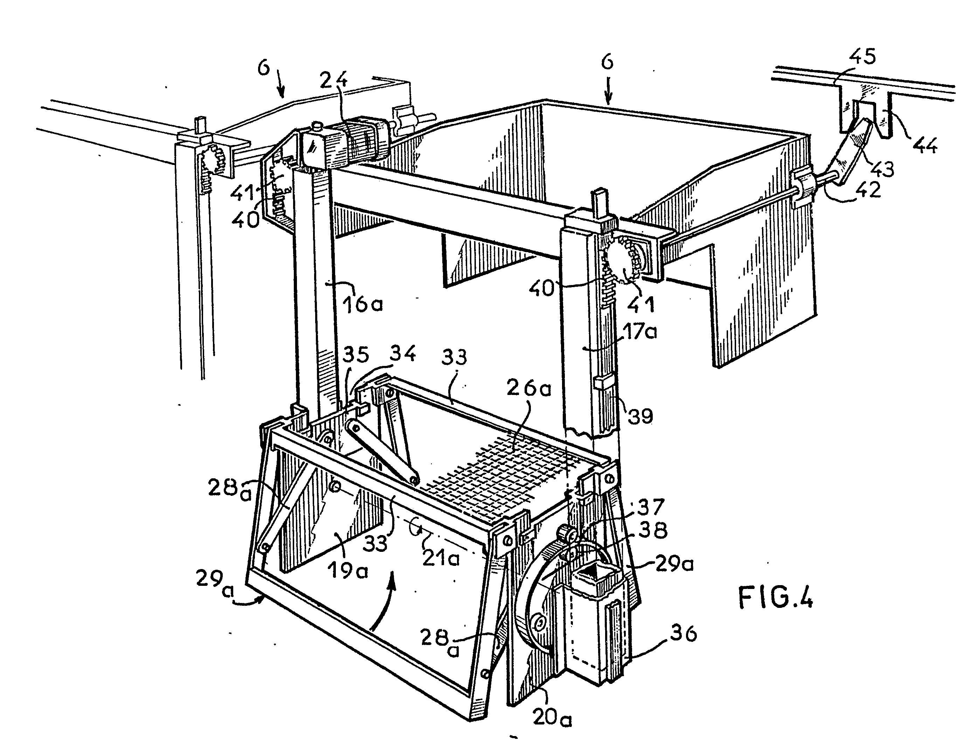

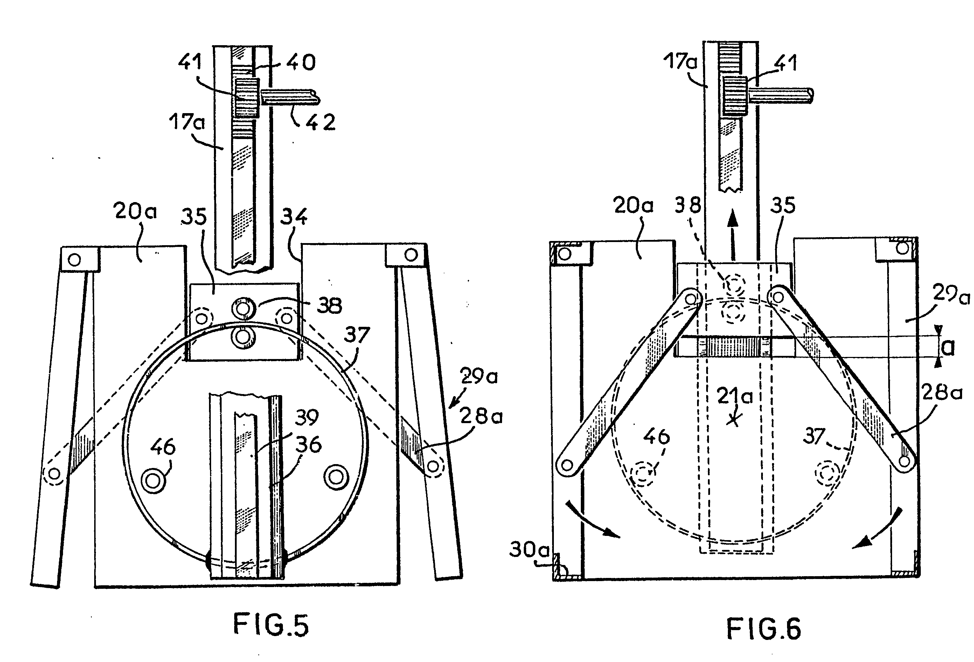

Le dispositif illustré par les figures 4 à 6 diffère essentiellement du précédent par le fait que le serrage du panier ne s'effectue pas dans le plan des barres 16 et 17, mais perpendiculairement à ce plan. En effet, les barres 16a et 17a sont montées fixes, en position verticale, sur la tête 6, et non plus de manière pivotante. Les plaques de maintien 19a et 20a, de forme générale également rectangulaire, sont montées mobiles en rotation autour d'un axe horizontal 21a à l'aide de moyens d'entrainement qui seront décrits plus loin. Les angles supérieurs de ces plaques sont réunis par deux traverses horizontales 33 qui délimitent un couvercle 26a fixe. Sur ces traverses 33, sont montés pivotants des organes de serrage en forme de U 29a dont la traverse inférieure horizontale est formée par une cornière constituant un élément de soutien inférieur 30a (voir Fig. 6).

Les plaques 19a et 20a présentent à leurs parties supérieures des lumières 34 à l'intérieur desquelles sont montées coulissantes dans le sens verticale des plaquettes 35 sur lesquelles sont articulées des paires de biellettes 28a dont les autres extremités sont articulées sur les montants des organes de serrage 29a.

Les plaquettes 35 sont mobiles entre une position inférieure (Fig. 5) pour laquelle les organes de serrage 29a sont suffisamment écartés pour qu'in panier 13 puisse passer entre les éléments de soutien inférieurs 30a, et une position supérieure (Fig. 6) pour laquelle ces organes de serrage sont ramenés en position verticale, position dans laquelle les éléments de soutien 30a se trouvent placés sous les angles inférieurs du panier 13.

Ces plaquettes 35 sont déplacées verticalement grâce à des caissons à sections en U 36 qui sont montés coulissants dans le sens vertical sur la partie inférieure des barres 16a et 17a et sur lesquels sont soudées des couronnes 37 qui sont disposées parallèlement aux plaques 19a et 20a entre celles-ci et les barres 16a et 17a et qui sont pincées entre des paires de galets 38 disposés verticalement l'un au-dessus de l'autre sur chacune des plaquettes 35. Les caissons 36 sont déplacés verticalement sur les barres 16a et 17a grâce à des tiges 39 qui sont guidées verticalement sur les barres et qui présentent à leurs extrémités supérieures des tronçons de crémaillère 40 qui engrènent avec des pignons 41 montés, sur la partie avant de la tête 6, à l'extrémité d'arbres de commande horizontaux 42. Ces arbres 42 portent à leur autre extrémité, située au-delà la partie arrière de la tête 6, des bras radiaux 43 qui sont engagés dans des fourches verticales 44 solidaires d'une barre de commande générale horizontale 45 qui s'étend sur toute la largeur de l'installation, commandant ainsi en synchronisme l'ensemble des dispositifs de cette installation grâce à un vérin unique de commande placé à l'extrémité de cette barre. Bien entendu, l'une des tiges verticales 39 est coudée de manière à ce que sa crémaillère 40 soit disposée par rapport à son pignon 41 du même que l'autre crémaillère.

Chacune des plaques 19a et 20a porte par ailleurs deux autres galets 46 qui, lorsque les plaquettes 35 sont situées dans leur position supérieure (Fig. 6), sont situés à la même distance que le galet inférieur 38 par rapport à l'axe de rotation 21a, et à 120° de part et d'autre de la verticale. Ainsi, dans cette position, la couronne 37 est également au contact de ces galets 6 et se trouve parfaitement centrée par rapport à l'axe de rotation 21a. Il n'en est par contre pas de même pour la position inférieure des plaquettes 35 (fig. 5), pour laquelle la couronne 37 étant déplacée vers le bas ne se trouve plus au contact des galets 46.

Les plaques 19a et 20a sont bien entendu montées en rotation, autour de l'axe 21a, sur les barres fixes 16a et 17a exactement de la même façon que les plaques 19 et 20 du premier mode de réalisation sont montées sur les barres 16 et 17, à savoir pour la première par l'intermédiaire d'un renvoi d'angle entraîné à partir d'un moteur 24, et pour la seconde par l'intermédiaire d'une roue libre.

Le fonctionnement du dispositif ainsi décrit est le suivant:

La tête 6 étant en position haute, la tringle de commande 45 actionne les tiges de commande 39 pour abaisser les couronnes 37 et les plaquettes 35 dans la position de la Fig. 5, pour laquelle les organes de serrage 29a sont écartés. La tête 6 est alors abaissée à l'aide du vérin 9 au-dessus d'un panier 13 qui vient d'être amené sur le socle 15. L'actionnement de la tringle 45 en sens inverse provoque alors un soulèvement des couronnes 37 et des plaquettes 45, et par conséquent une fermeture des organes de serrage 29a dont les éléments de soutien 30a viennent se placer sous les bords inférieurs du panier.

La tête 6 et le panier 13 qu'elle porte, peuvent alors être remonté en position haute à l'aide du vérin 9, puis transféré au poste voisin à l'aide du moteur 11, et enfin redescendus versla cuve de traitement de ce poste à l'aide encore du vérin 9. Etant donné que dans la position de fermeture des organes de serrage 29a (Fig. 6), les galets 46 et le galet inférieur 38 sont bien disposés de manière concentrique par rapport à l'axe 21a, les deux plaques de maintien 19a et 20a peuvent être entrainées en rotation autour de cet axe 21a. Une telle rotation peut bien entendu être effectuée non seulement dans une cuve, mais également dans toute autre position élevée ou intermédiaire de chacun des postes, dans la mesure où les organes de serrage 29a sont bien fermés et par conséquent les différents galets bien centrés sur l'axe 21a.

Pour être déposé à l'intérieur d'un cuve, oubien en fin de traitement au poste d'évacuation, le panier ne peut être libéré par le mouvement des plaquettes 35 que lorsque les paires de galets 38 sont bien revenues en position verticale au-dessus de l'axe 21a, seule position dans laquelle les couronnes 37 peuvent se déplacer sous l'action des tiges de commande 39. Il en résulte donc que le panier ne peut être libéré par l'ouverture des organes de serrage 29a que lorsque l'ensemble a bien été ramené dans sa position d'origine.

**Revendications**

1. Dispositif de manoeuvre de pièces à traiter pour installation de traitement dans laquelle les pièces à traiter sont placées dans au moins un récipient ouvert (13), ce dispositif étant du type comprenant un châssis (5), des moyens de support (16, 17, 19, 20, 30, 16a, 17a, 19a, 20a, 29a, et 30a) du ou des récipients (13) et des moyens (9) de déplacement d'ensemble de ces moyens de support (13, 17, 19, 20, 30, 16a, 17a, 19a, 20a, 29a, 30a) par rapport au châssis (5), lesdits moyens de support comportent deux organes de serrage (16, 17, 19, 20, 28, 28a, 29a, 30a et 35) qui sont mobiles l'un vers l'autre suivant une direction horizontale, et étant munis d'un couvercle (26, 26a) de fermeture du récipient (13), ledit couvercle étant relié mécaniquement aux organes de serrage (16, 17, 19, 20, 28, 28a, 29a, 30a, et 35) et étant maintenu en position de fermeture sur le récipient (13) lorsque lesdits organes de serrage sont bloqués sur ce dernier, ledit dispositif comportant des moyens (22, 23, 24) d'entrainement en rotation des moyens de support (16, 17, 19, 20, 30, 16a, 17a, 19a, 20a, 29a, 30a) autour d'un axe horizontal (21, 21a) sensiblement central par rapport au récipient (13), lesdits moyens d'entrainement en rotation étant indépendants des moyens de déplacement du châssis.

2. Dispositif suivant la revendication 1, caractérisé en ce que le couvercle (26) est relié aux organes de serrage (19, 20) par des biellettes (31).

3. Dispositif suivant la revendication 1, caractérisé en ce que le couvercle (26a) est fixé entre deux organes de maintien latéral (19a, 20a) du récipient se déplaçant par rapport à celui-ci lorsque les organes de serrage (29) se ferment.

4. Dispositif suivant l'une quelconque des revendications 1 et 2, dans lequel les organes de serrage sont montés sur un bloc de déplacement monté mobile sur le châssis suivant la direction de déplacement, par l'intermédiaire d'éléments allongés, caractérisé en ce que ces éléments allongés comprennent deux barres (16, 17) qui sont montées mobiles par rapport au bloc de déplacement (6) suivant la direction de serrage, les organes de serrage (19, 20—29) étant directement montés à l'extrémité de ces barres.

5. Dispositif suivant la revendication 4, caractérisé en ce que chacune des deux barres (16, 17) est montée pivotante par rapport au bloc de déplacement (6) autour d'un axe (18) perpendiculaire à la direction de déplacement et à la direction de serrage et reliée par une biellette d'actionnement (28) à des moyens moteurs (27).

6. Dispositif suivant l'une quelconque des revendications 1 et 3, dans lequel les organes de serrage sont montés sur un bloc de déplacement monté mobile sur le chassis suivant la direction de déplacement, par l'intermédiaire d'éléments allongés, caractérisé en ce que ces éléments allongés comprennent deux barres (16a, 17a) qui sont montées fixes sur le bloc de déplacement (6), les organes de serrage (29a) étant montés mobiles sur des éléments de support (19a, 20a) montés à l'extrémité des barres.

7. Dispositif suivant la revendication 6, caractérisé en ce que les deux organes de serrage (29a) sont montés pivotants par rapport aux éléments de support (19a, 20a) et reliés par des biellettes d'actionnement (28a) à des éléments d'actionnement (39).

8. Dispositif suivant l'une quelconque des revendications 6 et 7 lorsqu'elles dépendent de la revendication 3, caractérisé en ce que les éléments de support (19a, 20a) sont les plaques de maintien latéral du ou des récipients contenant les pièces à traiter.

9. Dispositif suivant la revendication 8, caractérisé en ce que la direction de serrage est perpendiculaire à l'axe de rotation (21a) et les moyens d'entraînement en rotation comprennent des moyens de centrage (35—37) mobiles entre une position d'actionnement dans laquelle ils sont centrés sur l'axe de rotation et une position de retrait dans laquelle ils sont excentrés par rapport à cet axe.

10. Dispositif suivant la revendication 9, caractérisé en ce que les moyens de centrage (35—37) comprennent des plaquettes (35) qui sont montées mobiles par rapport aux plaques de maintien (19a, 20a) suivant la direction de déplacement et sur lesquelles sont articulées les biellettes (28a), ces plaquettes (35) étant solidaires en translation suivant ladite direction de déplacement d'éléments d'actionnement (39), par l'intermédiaire de couronnes (37) dont les plans moyens sont parallèles aux plaques de maintien et qui s'appuient à roulement, d'une part, sur des organes de roulement (38) solidaires des plaquettes et, d'autre part, lorsque ces plaquettes sont dans la position d'actionnement pour laquelle les organes de serrage sont fermés, sur d'autres organes de roulement (46) solidaires des plaques (19a, 20a), les différents organes de roulement (38—46) étant disposés de manière concentrique par rapport à l'axe de rotation (21a) pour ladite position d'actionnement.

11. Dispositif suivant l'une quelconque des revendications 7 et 10, caractérisé en ce que les éléments d'actionnement (39, 39a) sont des éléments allongés disposés parallèlement à la direction de déplacement et dont les autres extrémités, situées sur le bloc de déplacement (6), sont elles-mêmes solidaires de moyens moteurs (27, 42—45).

12. Dispositif suivant l'une quelconque des revendications 5 et 11, caractérisé en ce que les moyens moteurs (27, 42—45) sont constitués par un vérin (27) disposé sur le bloc de déplacement (6).

13. Dispositif suivant l'une quelconque des revendications 10 et 11, caractérisé en ce que, dans le cas d'un dispositif destiné à une installation à dispositifs multiples, les moyens moteurs (27, 42—45) comprennent un mécanisme de transmission (42) solidaire d'un organe de commande (45) destiné à être actionné par une commande d'ensemble de l'installation.

14. Dispositif suivant l'une quelconque des revendications 1 à 13, caractérisé en ce que les moyens d'entraînement en rotation (22—24—25, 24—35—37) comportent deux éléments (22—25) situés en regard l'un de l'autre suivant l'axe de rotation et dont au moins un (22) est relié à un organe moteur (24).

15. Dispositif suivant la revendication 14, caractérisé en ce que l'autre élément d'entraînement en rotation (25) est monté en roue libre sur les moyens de déplacement (6—16—17).

16. Dispositif suivant l'une quelconque des revendications 14 et 15, caractérisé en ce que les éléments d'entraînement en rotation comprennent des plaques (19—20, 19a—20a) de maintien latéral de la ou des pièces à traiter.

17. Dispositif suivant l'un quelconque des revendications 1 à 16, caractérisé en ce que l'axe de rotation (21, 21a) est perpendiculaire à la direction de déplacement et compris dans le plan des deux barres (16—17, 16a—17a).

18. Dispositif suivant la revendication 17, caractérisé en ce que l'organe moteur (24) est disposé sur le bloc de déplacement (6) et relié à l'élément d'entraînement moteur par un organe de transmission (23) disposé le long d'un élément allongé de support et par un renvoi d'angle (22).

19. Dispositif suivant l'une quelconque des revendications 1 à 18, caractérisé en ce que la direction de déplacement est verticale et la direction de serrage horizontale.

**Patentansprüche**

1. Vorrichtung für die Behandlung von Werkstücken in Bearbeitungsanlage, in der sich die Werkstücke in mindestens einem offenen Behälter (13) befinden, welche Vorrichtung ein Gestell (5), Tragmittel (16, 17, 19, 20, 30, 16a, 17a, 19a, 20a, 29a und 30a) einen oder mehrere Behälter (13) und eine Einrichtung (9) zum Verschieben der gesamten Tragmittel (13, 17, 19, 20, 30, 16a, 17a, 19a, 20a, 29a, 30a) relativ zum Gestell (5) aufweist, wobei die genannten Tragmittel zwei Klemmorgane (16, 17, 19, 20, 28, 28a, 29a, 30a und 35) aufweisen, die gegeneinander in horizontaler Richtung bewegbar und mit einem Deckel (26, 26a) zum Verschließen des Behälters (13) versehen sind, welcher Deckel mechanisch mit den Klemmorganen (16, 17, 19, 20, 28, 28a, 29a, 30a und 35) verbunden ist und auf dem Behälter (13) in Schließstellung festgehalten wird, wenn die genannten Klemmorgane an dem Behälter blockiert sind, wobei die genannte Vorrichtung eine Drehantriebseinrichtung (22, 23, 24) für die Tragmittel (16, 17, 19, 20, 30, 16a, 17a, 19a, 20a, 29a, 30a) aufweist, um diese in Drehbewegung um eine horizontale, in bezug auf den Behälter (13) im wesentlichen zentrale Achse (21, 21a) zu versetzen, wobei die Drehantriebseinrichtung unabhängig von der Einrichtung zum Verschieben des Gestelles ist.

2. Vorrichtung nach Anspruch 1, dadurch gekennzeichnet, daß der Deckel (26) mit den Klemmorganen (19, 20) durch Schwingarme (31) verbunden ist.

3. Vorrichtung nach Anspruch 1, dadurch gekennzeichnet, daß der Deckel (26a) zwischen zwei seitlichen Behälter-Halteorganen (19a, 20a) fixiert ist, die sich in bezug auf den Behälter bewegen, wenn sich die Klemmorgane (29) schließen.

4. Vorrichtung nach Anspruch 1 oder 2, bei der die Klemmorgane über längliche Elemente an einem am Gestell in der Verscheibungsrichtung bewegbar angeordneten Verschiebungsblock montiert sind, dadurch gekennzeichnet, daß die länglichen Elemente zwei Stangen (16, 17) aufweisen, die relativzum Verschiebungsblock (6) in Klemmrichtung bewegbar angeordnet sind, wobei die Klemmorgane (19, 20—29) direkt an den Enden dieser Stangen angeordnet sind.

5. Vorrichtung nach Anspruch 4, dadurch gekennzeichnet, daß jede der beiden Stangen (16, 17) relativ zum verschiebungsblock (6) um eine zur Verschiebungsrichtung und zur Klemmrichtung senkrechte Achse (18) drehbar montiert und durch einen Betätigungsschwingarm (28) mit einer Antriebseinrichtung (27) verbunden ist.

6. Vorrichtung nach Anspruch 1 oder 3, bei der die Klemmorgane über längliche Elemente an einem am Gestell in der Verscheibungsrichtung bewegbar angeordneten Verschiebungsblock montiert sind, dadurch gekennzeichnet, daß die länglichen Elemente zwei Stangen (16, 17a) aufweisen, die fest am Verschiebungsblock (6) montiert sind, wobei die Klemmorgane (29a) beweglich auf an den Enden der Stangen angeordneten Stützelementen (19a, 20a) montiert sind.

7. Vorrichtung nach Anspruch 6, dadurch gekennzeichnet, daß die beiden Klemmorgane (29a) relativ zu den Stützelementen (19a, 20a) schwenkbar angeordnet und durch Betätigungsschwingarme (28a) mit Betätigungselementen (39) verbunden sind.

8. Vorrichtung nach Anspruch 6 oder 7, soferne sie auf Anspruch 3 rückbezogen sind, dadurch gekennzeichnet, daß die Stützelemente (19a, 20a) die seitlichen Halteplatten für den oder die die Werkstücke enthaltenden Behälter bilden.

9. Vorrichtung nach Anspruch 8, dadurch gekennzeichnet, daß die Klemmrichtung senkrecht zu Drehachse (21a) verläuft und die Drehantriebseinrichtung Zentriermittel (35—37) aufweist, die zwischen einer Betriebsstellung, in der sie zur Drehachse zentriert sind, und einer Ruhestellung, in der sie relativ zu dieser Achse exzentrisch sind, bewegbar sind.

10. Vorrichtung nach Anspruch 9, dadurch gekennzeichnet, daß die Zentriermittel (35—37) Platten (35) aufweisen, die relativ zu den Halteplatten (19a, 20a) in der Verschiebungsrichtung bewegbar angeordnet sind und mit denen die Schwingarme (28a) gelenkig verbunden sind, wobei die Platten (35) für eine geradlinige Bewegung in der Verschiebungsrichtung mit den Betätigungselementen (39) über Kränze (37) verbunden sind, deren Mittelebenen parallel zu den Halteplatten sind und die sich einerseits gegen mit diesen Platten kraftschlüssig verbundene Lagerorgane (38) und anderseits, wenn sich diese Platten in der Betriebsstellung befinden, in der die Klemmorgane geschlossen sind, gegen andere mit den Platten (19a, 20a) kraftschlüssig verbundene Lagerorgane (46) voll beweglich abstützen, wobei die verschiedenen Lagerorgane (36—46) für die genannte Betriebsstellung konzentrisch mit Bezug auf die Drehachse (21a) angeordnet sind.

11. Vorrichtung nach Anspruch 7 oder 10, dadurchgekennzeichnet, daß die Betätigungselemente (39, 39a) zur Verschiebungsrichtung parallel angeordnete längliche Elemente sind, deren andere, am Verschiebungsblock (6) angeordnete Enden ihrerseits kraftschlüssig mit Antriebseinrichtungen (27, 42—45) verbunden sind.

12. Vorrichtung nach Anspruch 5 oder 11, dadurch gekennzeichnet, daß die Antriebseinrichtung (27, 43—45) durcheine auf dem Verschiebungsblock (6) angeordnete Winde (27) gebildet sind.

13. Vorrichtung nach Anspruch 10 oder 11, dadurch gekennzeichnet, daß im Falle einer für eine Anlage mit mehreren Vorrichtungen bestimmten Vorrichtung die Antriebseinrichtungen (27, 42—45) einen Transmissionsmechanismus (42) enthalten, der mit einem Steuerorgan (45) kraftschlüssig verbunden ist, das zur Betätigung durch eine Gesamtsteuerung der Anlage vorgesehen ist.

14. Vorrichtung nach einem der Ansprüche 1 bis 13, dadurch gekennzeichnet, daß die Drehantriebseinrichtung (22—24—25, 24—35—37) zwei in der Drehachse einander gegenüberliegende Elemente (22—25) aufweist, von denen wenigstens eines (22) mit einem Antriebsorgan (24) verbunden ist.

15. Vorrichtung nach Anspruch 14, dadurch gekennzeichnet, daß das andere Drehantriebselement (25) frei drehbar an der Verschiebungseinrichtung (6—16—17) angeordnet ist.

16. Vorrichtung nach Anspruch 14 oder 15, dadurch gekennzeichnet, daß die Drehantriebselemente Platten (19—20, 19a—20a) zum seitlichen Festhalten des (der) Werkstücke(s) aufweisen.

17. Vorrichtung nach einem der Ansprüche 1 bis 16, dadurch gekennzeichnet, daß die Drehachse (21, 21a) senkrecht zur Verschiebungsrichtung ist und in der Ebene der beiden Stangen (16—17, 16a—17a) liegt.

18. Vorrichtung nach Anspruch 17, dadurch gekennzeichnet, daß das Antriebsorgan (24) auf dem Verschiebungsblock (6) angeordnet und mit dem Antriebselement über ein entlang eines länglichen Stützelementes angeordnetes Transmissionsorgan (23) und ein Winkelgetriebe (22) verbunden ist.

19. Vorrichtung nach einem der Ansprüche 1 bis 18, dadurch gekennzeichnet, daß die Verschiebungsrichtung vertikal und die Klemmrichtung horizontal ist.

## Claims

1. Apparatus for manipulating parts to be treated for a treatment installation, in which the parts to be treated are placed in at least one open receptacle (13), the apparatus being of the kind comprising a frame (5), support means (16, 17, 19, 30, 16a, 17a, 19a, 20a, 29a, and 30a) for the receptacle or receptacles (13) and means (9) for displacing the complete support means (13, 17, 19, 20, 30, 16a, 17a, 19a, 20a, 29a, 30a) relative to the frame (5), said support means comprising two grip members (16, 17, 19, 29, 28, 28a, 29a, 30a, and 35) which are mounted movably towards each other in a horizontal direction and a cover (26, 26a) for closing the receptacle (13), said cover being connected mechanically to the grip members (16, 17, 19, 20, 28, 28a, 29a, 30a and 35), and being maintained in the closed position on the receptacle (13) when said grip members are locked on the receptacle, the apparatus including means (22, 23, 24) for driving said support means (16, 17, 19, 20, 30, 16a, 17a, 19a, 20a, 29a, 30a) rotationally about a horizontal axis (21, 21a) which is substantially central relative to the receptacle (13), said rotational drive means being independent of the frame displacement means.

2. Apparatus according to claim 1, characterised in that the cover (26) is connected to the grip members (19, 20) by connecting rods (31).

3. Apparatus according to claim 1, characterised in that the cover (26a) is fixed between two side grip members (19a, 20a) for the receptacle, for displacement relative to the receptacle when the grip members (29) close.

4. Apparatus according to either of claims 1 and 2, in which the grip members are mounted on a displacement block mounted for movement on the frame in the direction of displacement, by means of elongate members, characterised in that the elongate members comprise two bars (16, 17) which are mounted for movement relative to the displacement block (6) in the grip direction, the grip members (19, 20—29) being directly mounted at the end of the bars.

5. Apparatus according to claim 4, characterised in that each of the bars (16, 17) is mounted for pivoting relative to the displacement block (6) about an axis (18) perpendicular to the displacement direction and to the grip direction and connected by an actuation connecting rod (28) to motor means (27).

6. Apparatus according to either of claims 1 and 3, in which the grip members are mounted on a displacement block mounted for movement on the frame in the displacement direction, by means of elongate members, characterised in that the elongate members comprise two bars (16a, 17a) which are fixed to the displacement block (6), the grip members (29a) being mounted for movement on support members (19a, 20a) mounted at the ends of the bars.

7. Apparatus according to claim 6, characterised in that the two grip members (29a) are mounted for pivoting relative to the support members (19a, 20a) and are connected by actuating connecting rods (28a) to actuating members (39).

8. Apparatus according to either of claims 6 and 7 as dependent from claim 3, characterised in that the support members (19a, 20a) are side support plates for the receptacle or receptacles containing the parts to be treated.

9. Apparatus according to claim 8, characterised in that the grip direction is perpendicular to the rotation axis (21a) and the rotational drive means comprise centering means (35—37) for movement between an actuating position in which they are centered on the rotational axis and a retracted position in which they are off-centred from the axis.

10. Apparatus according to claim 9, characterised in that the centering means (35—37) comprise plates (35) which are mounted for movement relative to the grip plates (19a, 20a) in the direction of displacement and on which are hinged the connecting rods (28a), the plates (53) being solid in translation in said direction of displacement with actuating members (39), by means of rings (37) whose mean planes are rolling members (38) solid with the centering plates and also, when the centering plates are in their actuated position in which the grip members are closed, on other rolling members (46) solid with the grip plates (19a, 20a) the different rolling members (38—46) being disposed concentrically relative to the rotation axis (21a) for said actuated position.

11. Apparatus according to either of claims 7 and 10, characterised in that the actuating members (39, 39a) are elongate members disposed parallel to the displacement direction and whose other ends, disposed on the displacement direction and whose other ends, disposed on the displacement block (6) are solid with motor means (27, 42—45).

12. Apparatus according to either of claims 5 and 11, characterised in that, in that the motor means (27, 42—45) comprise a ram (27) disposed on the displacement block.

13. Apparatus according to either of claims 5 and 11, characterised in that, in the case of an installation including a plurality of apparatuses, the motor means (27, 42—45) comprises a transmission mechanism (42) solid with a control member (45) for actuation by a control unit of the installation.

14. Apparatus according to any of claims 1 to 13, characterised in that the rotational drive means (22—24—25, 24—35—37) comprise two members (22—25) disposed facing each other in the rotational axis, one (22) at least of which is connected to a motor device (24).

15. Apparatus according to claim 14, characterised in that the other rotational drive member (25) is mounted for free rotation on the displacement means (6—16—17).

16. Apparatus according to either of claims 14 and 15, characterised in that the rotational drive members comprise plates (19—20, 19a—20a) for gripping laterally the part or parts to be treated.

17. Apparatus according to any of claims 1 to 16, characterised in that the rotational axis (21, 21a) is perpendicular to the displacement direction and included in the plane of the two bars (16—17, 16a—17a).

18. Apparatus according to claim 17, characterised in that the motor member (24) is disposed on the displacement block (6) and connected to the motor drive member by a transmission member (23) disposed along an elongate member of the support and by an angle connection (22).

19. Apparatus according to any one of claims 1 to 18, characterised in that the displacement direction is vertical and the grip direction horizontal.

FIG.1

FIG.3

FIG.2

FIG.4

FIG.6

FIG.5

4